# EUROPEAN PATENT APPLICATION

(11) **EP 3 163 589 A1**
(43) Date of publication of application: **03.05.2017**
(21) Application number: 15192600.3
(22) Date of filing: 02.11.2015
(51) Int. Cl.: H01F 27/06, H01F 27/26

(54) **TRACTION TRANSFORMER**

(71) Applicant: ABB Technology AG, 8050 Zürich (CH)
(72) Inventor: THORENS, Blaise, 1203 Geneva (CH); ISLER, Stephane, 74130 Contamine sur Arve (FR); CHAUDHURI, Toufann, 1110 Morges (CH)
(74) Representative: ABB Patent Attorneys

(57) **Abstract**

The invention relates to a traction transformer (1) for railbound vehicles comprising:
- an insulating liquid filled enclosure (20) with a first and a second cover (206, 207) arranged at longitudinal ends of the enclosure (20),
- at least two windings (30, 31) contained in the enclosure (20),
- a transformer core (40) arranged outside the enclosure (20),
- mounting means (50) for mounting the transformer (10) to the railbound vehicle,

wherein the transformer core (40) is arranged outside the enclosure (20) and extend beyond the enclosure.

## Description

### Technical field

The present invention relates to the field of traction transformers for electric railway vehicles. It refers to a traction transformer as described in the preamble of claim 1.

### Related art

In electric railway propulsion vehicles such as locomotives or rail coaches, the traction transformer is a crucial piece in the traction chain. If the traction transformer fails, the train is immobilised and a track section is blocked. The traction transformer is the main transformer on the railbound vehicle and provides energy from the catenary to the propulsion motor and for all on board systems. Traction transformers have to accommodate different input frequencies and voltage (ranging from as high as 50 Hz down to 16.7 Hz and rated up to 25 kV) while being suitable for multiple AC asynchronous motor and DC converters and motors with varying harmonics mitigation filtering requirements. To provide high-power conversion the traction transformer need to be designed with a substantial size and weight.

The traction transformer is usually placed outside the main casing of the traction vehicle, i.e. underfloor or on the roof top where space is limited because of the maximal allowable vehicle height or the available space between underfloor and rail. Tractions transformers may also be placed inside the main casing and prevail similar space limitations. Further, due to considerable weight of the transformer care has to be taken if roof top or underfloor installations are demanded.

The first traction transformers have been constructed with dry insulation or air insulations causing frequent failures as flashovers and electrical discharges during operation. The failures are caused by dust or humidity to which the transformer was exposed.

Nowadays state of the art traction transformers for electric railway propulsion vehicles are oil-insulated and oil-cooled transformers to meet the requirements. Oil being a very good heat transfer medium and a good electrically insulating material compared to air, when a high power density is needed. More sophisticated state of the art traction transformers as disclosed in WO2014086948A2 reduce on the one hand considerably the weight of the transformer and on the other hand continue take the advantages of the insulation and cooling medium oil by encasing only the windings of the transformers in a tank filled with the transformer oil. The transformer core is outside the enclosed oil volume and therefore not in contact with the transformer oil.

With a traction transformer design of increased power density the electrical isolation properties and mechanical stability of traction transformers becomes more and more challenging. A transformer designed for traction applications must be designed to withstand all occurring mechanical vibrations, shocks and acceleration forces of a railway propulsion vehicle.

It is therefore an object of the present invention to provide a compact traction transformer with reduced size and weight which meets the electrical and mechanical requirements of traction applications.

### Summary of the invention

This object has been achieved by traction transformer according to claim 1.

Further embodiments of the present invention are indicated in the depending subclaims.

According to a first aspect, a traction transformer for railbound vehicles is provided, which comprises:
- an insulating liquid filled enclosure,
- at least two windings contained in the enclosure with a first and a second cover arranged at longitudinal ends of the enclosure ,
- at least two windings contained in the enclosure,
- a transformer core arranged outside the enclosure,
- mounting means for mounting the transformer to the railbound vehicle,
wherein the mounting means are fixed to the enclosure and extend beyond the enclosure.

One idea of the above traction transformer is that the traction transformer is mechanically stable coupled with the enclosure to the railbound vehicle. Forces caused for example by acceleration or mechanical vibration while driving act on the railbound vehicle and are transmitted first to the enclosure via the mounting means. The mounting means overhang the ends of the enclosure to ensure a great mechanical stability of the fixation between the traction transformer and the railbound vehicle and prevent therewith any movement or rotation of the traction transformer during acceleration of the railbound vehicle. With other words, the mounting means and the enclosure of the traction transformer are directly connected and are in direct physical contact.

The windings of the traction transformer are housed in the liquid-filled enclosure which is closed by two covers arranged at the longitudinal ends of the enclosure. The transformer core can pass through the enclosure without being in contact with the insulating liquid. On the other hand forces acting on the transformer are transmitted directly from the enclosure to the railbound vehicle via the mounting means. The transformer design allows a reduction of the amount of insulating liquid to be filled in the enclosure and provides a stable and stiff mechanical connection between the traction transformer and the railbound vehicle. Hence, the above traction transformer has reduced size and weight.

It may be provided that the mounting means extend beyond a longitudinal end of the enclosure in a longitudinal direction of the core providing a high mechanical stability.

It may be provided that the mounting means are solely fixed to the enclosure of the traction transformer. In this way other parts of the transformer, in particular the transformer core is primarily not used for fixation of the transformer to the railbound vehicle.

It maybe provided that the mounting means extend beyond a lateral end of the enclosure which is a direction perpendicular to the longitudinal direction of the core.

Furthermore, the enclosure may be formed by at least one cylindrical inner housing and by a cylindrical outer housing partially surrounding the at least one cylindrical inner housing, wherein an enclosed volume of the enclosure between the at least one cylindrical inner housing and the cylindrical outer housing is filled with the insulating liquid and wherein portions of the transformer core extend through the at least one cylindrical inner housing. The windings enclose the inner cylindrical housing and are supported by the outside surface of the inner cylindrical housing.

It may be provided that the enclosure is clamped between the at least two support elements pressing at the axial ends onto the first and onto the second cover.

The first cover and the second cover are liquid-tight sealed to the axial ends of the enclosure. Both covers have at least one opening which matches to a diameter of the at least one cylindrical inner housing. In this way a hollow cylinder is formed which contains the insulating liquid. Typically the limbs as part of the transformer core extend through the passage of the hollow cylinder. The liquid-tight sealing may be formed by a glued joint, a gasket or by welding.

Furthermore, the traction transformer is of core-type which means two yokes and two limbs form the core loop. To each of the limbs at least one winding is attached. The yokes extend outside at both axial ends of the enclosure to which the mounting means are fixed.

In may be provided that the mounting means are formed as sidebars which run in parallel and extend in longitudinal direction. The enclosure rests on the sidebars to which they are directly attached.

Furthermore, stiffening elements may be comprised to absorb forces along the yoke direction and therewith along the moving direction of the railway vehicle. The stiffening elements are attached to portion of the transformer which extends through the cylindrical inner housing.

It may be provided that the at least two support elements are adapted to the shape of the first cover and the second cover. Those shaped support elements prevent escaping of magnetic stray fields in an axial direction of the windings and the core limbs. Parasitic effects of the stray field to neighboring ferromagnetic parts of the railway vehicle and to the rail causing eddy currents and other losses are reduced.

It may be provided that the traction transformer is a transformer of core-type and the enclosure is adapted to the outer contour of the traction transformer having an eight-shaped cross section in a direction perpendicular to the axial direction of the windings. The eight-shaped cross section advantageously improves the mechanical stability of the cylindrical outer housing and therewith of the full enclosure and at the same time reduces the enclosed volume. Hence less amount of the insulating liquid is needed.

### Brief description of the drawings

Embodiments will be described in more detail in conjunction with the accompanying drawings, in which:
- Figure 1a: shows a perspective view of a traction transformer with mounting means for horizontal mounting according to the invention;
- Figure 1b: shows a side view of the traction transformer which is shown in Figure 1a;
- Figure 1c: shows another side view of the traction transformer shown in Figure 1 a;
- Figure 1d: shows a section view of the traction transformer according to the invention;
- Figure 2: shows a side view of a variant of the traction transformer.

### Description of embodiments

Reference will now be made in detail to the embodiments, one or more examples of which are illustrated in the figures. Each example is provided by way of explanation, and is not meant as a limitation of the invention. Within the following description of the figures, the same reference numbers refer to the same components. Generally, only the differences with respect to individual embodiments are described.

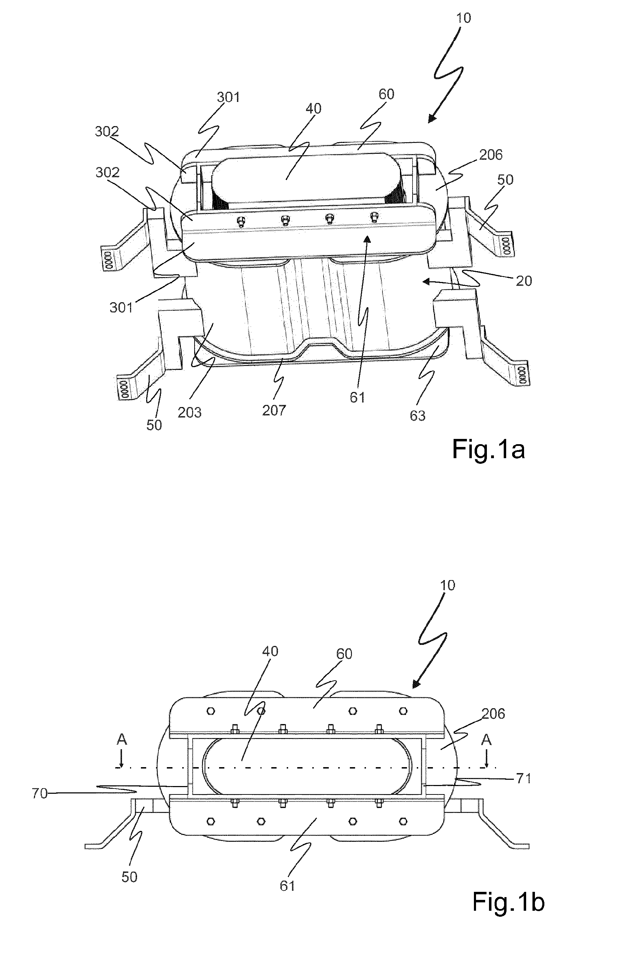

In the following a first embodiment of the traction transformer is described in conjunction with the views according to Figures 1a to 1d. The traction transformer 10 comprises an enclosure 20 filled with insulating liquid 205. The insulating liquid typically comprises mineral oil, silicon oil, synthetic or vegetable oil and serves for electrical isolation of the windings and for cooling of the windings.

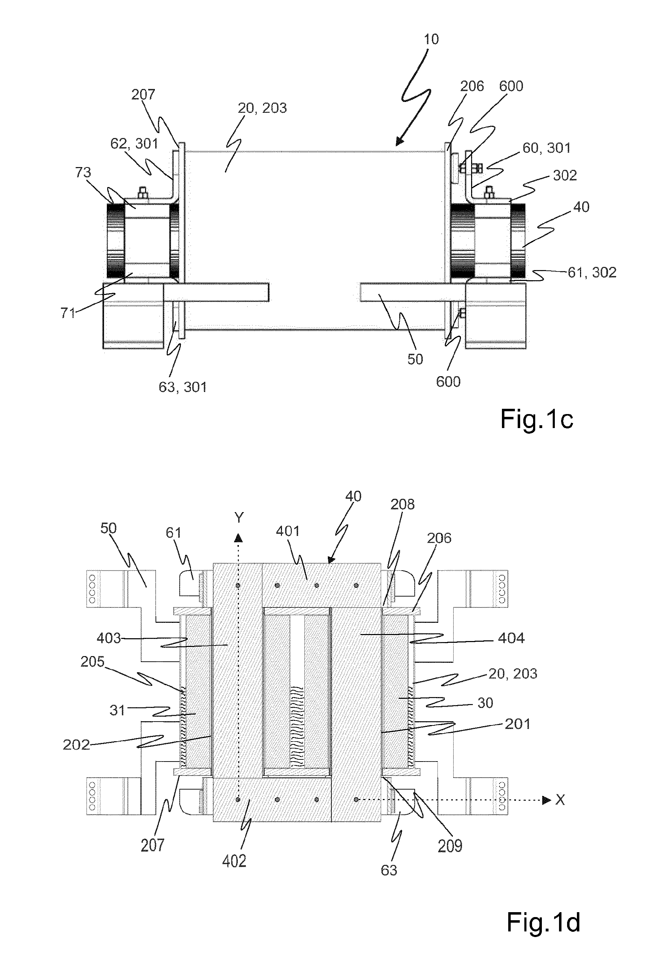

The enclosure 20 is formed by two cylindrical inner housings 201, 202 and by a cylindrical outer housing 203 surrounding the two cylindrical inner housings 201, 202. Each of the cylindrical inner housings 201, 202 has an annular cross section and has a cylinder axis which is substantially parallel to the cylinder axis of the outer housing 203, which is the axial direction Y as indicted in Figure 1d. The axial direction Y is also the axial direction of the windings 30, 31 and the longitudinal direction of the yokes 403, 404. The cylindrical inner housings 200, 201 may also be shaped with different cross-sections (across the axial direction Y thereof).

Each of both axial ends of the enclosure 20 is closed by a first and a second cover 206, 207 respectively. The first and the second cover 206, 207, the two cylindrical inner housings 201, 202, and the cylindrical outer housing 203 form an enclosed volume which is filled with the insulating liquid 205 in particular with transformer oil. The windings 30, 31 which are accommodated in the enclosure are completely immersed in the transformer oil. Therefore the first and the second cover 206, 207 are liquid-tight sealed to the cylindrical outer housing 203 and to the two cylindrical inner housings 201, 202. The sealing can be made by a glued joint. Alternatively, the sealing may be made by a gasket or by a type of welding.

Figure 1d is a section view of Figure 1 b taken along the A-A line of the traction transformer 10 according to the first embodiment and shows two circular openings 208, 209 in the first and the second cover 207, 208 respectively which openings 208, 209 match to the inner diameter of the cylindrical inner housing 201. Two further openings are provided and matching to the inner diameter of the cylindrical inner housing 202.

The two limbs 403, 404 of transformer core 40 extend through the two cylindrical inner housings 201, 202 and therewith through the two windings 30, 31. The limbs 403, 404 are bridged by the two transformer yokes 401, 402 at the axial ends of the enclosure 20. In this way a core-type transformer is realized with the windings 30, 31 solely immersed in the transformer oil. The transformer core 40 is outside the enclosure and therefore not in contact with transformer oil and may be cooled by air.

The windings 30, 31 are wound around the respective cylindrical inner housing 201, 202. The conductors of the winding 30, 31 can be wire-like, such as a coil of metal wire, e. g. copper wire, or plate-like, coated with an electrical insulation layer, and are spirally wound around the cylindrical inner housings 201, 202. The winding 30 may act as a primary winding and the winding 31 may act as a secondary winding of the traction transformer 10 or vice versa.

To avoid a short circuit, the two cylindrical inner housings 201, 202 must not act as a turn of a parasitic secondary coil. Hence, both inner housings 201, 202 may made of electric insulating material for example an epoxy based composite.

For horizontal mounting of the traction transformer 10 to the railbound vehicle (not shown) the plane spanned by the X-Y directions is substantially parallel to the roof or to the underfloor of the railbound vehicle and defines the plane of mounting.

As can be seen from the Figures 1a to 1d, the mounting means 50 are embodied as four mounting feet and are fixed directly to the enclosure 20 at or close to the bottom side of the enclosure to which the transformer 10 will be mounted to the railbound vehicle.

The mounting means 50 can be welded to the enclosure 20 providing a rigid mechanical connection with the enclosure 20. Alternatively the mounting means 50 may attached to the enclosure by screwing or riveting which provides similar mechanical strength and rigidity like welding.

The four feet allow a mounting of the transformer 10 onto the roof top or underneath the floor of the railbound vehicle.

The feet extend beyond the dimensions of the enclosure 20 in X and Y direction which lends the traction transformer a big bearing surface. A big, wide spanning bearing surface lowers the center of gravity of the traction transformer and brings it toward the fixation points of the railbound vehicle. In this way acceleration forces acting on the heavy traction transformer 10 while driving can be absorbed. The mounting means 50 may also serve as damping elements against mechanical shock and mechanical vibrations originating from the movement of railbound vehicle.

As can be seen from Figures 1 a to 1 d the transformer core 40 is fixed to the enclosure 20 by four support elements 60, 61, 62, 63 which are angled. The support elements 60, 62 are arranged on the top of the transformer core 40 at the axial ends of the enclosure 20, wherein the two other support elements 61, 63 are arranged at the bottom side of the transformer core 40 at the axial ends of the enclosure 20.

The support elements 60, 61, 62, 63 are embodied as rails with a L-shaped profile and run parallel to the yokes 401, 402.

Each of the L-shaped support elements 60, 61, 62, 63 is screwed by one of its two legs 302 directly to the transformer core 40, whereas the other leg 301 of the support elements 60, 61, 62, 63 serves to clamp the transformer core 40 to the first and second cover 206, 207 and therewith to the enclosure 20. Latter ones press at the axial ends onto the first and second cover 206, 207. The support element 60 on the top of the transformer core 40 and the support element 61 on the bottom side of the transformer core 40 are arranged on the same longitudinal end of the transformer 10 and have an adjusting screw 600 to set a contact force for clamping the transformer core 40 via the support elements 60, 61, 62, 63 to the enclosure 20. The adjusting screws are fixed on the first legs 301 of the support element 60, 61 which presses against the first 206 or the second cover 207.

By clamping the transformer core 40 to the enclosure 20, the support elements 60, 61, 62, 63 serve also to keep the first and second cover 207, 208 in liquid-tight connection with the two inner cylindrical housings 201, 202 and the outer cylindrical housing 203.

Each of the yokes 401, 402 of the traction transformer 10 is screwed together with the respective support element 60, 62 on the top of the transformer core 40 and with the respective support element 61, 63 on the bottom side of the transformer core. The screw joint is arranged perpendicular to the axial direction Y of the windings.

The transformer core 40 as shown in Figure 1d is of stack-lap type. That means one or several layers of the limbs 403, 403 overlap with one or several layers of the yokes 401, 402. Eight through-holes are provided in the transformer core 40, of which four are made at the four corners of the transformer core 40 in the overlapping region of limbs 403, 404 and the yokes 401, 402. When the transformer core 40 is mounted to the support elements 60, 61, 62, 63 by screws then also the limbs are screwed together with the yokes 401, 402 providing highest rigidity and stability to the transformer core 40. The yokes 401, 402 are oriented parallel to the support elements 60, 61, 62, 63 and therewith along the X-direction.

The support elements 60, 61, 62, 63 may be adapted partially or full to the shape of cover first 206 or the second cover 207 so as to prevent escaping of the magnetic flux in axial direction Y of the windings. To provide an effective magnetic shielding a material of high magnetic permeability, for example Mumetal may be chosen for the support elements 60, 61, 62, 63. In this way shaped support elements 60, 61, 62, 63 act as shielding and prevent a distraction of the unwanted magnetic stray field to the environment, in particular to the railbound vehicle or the rails.

The traction transformer 10 may be provided with stiffening elements 70, 71, 72, 73 to absorb acceleration forces along the moving direction of the railbound vehicle. The stiffening elements 70, 71, 72, 73 are attached to the second legs 302 of the support elements 60, 61, 62, 63, which second legs 302 are screwed to the transformer core 40. The stiffening elements 70, 71, 72, 73 extend in a direction perpendicular to the X-Y plane. The fixation may be made by welding or may be made by screw joint. The stiffening elements 70, 71, 72, 73 are positioned before and after the parts of the transformer core 40 which extend beyond the axial ends of the housing 20, which are the yokes 401, 402.

The cylindrical outer housing 203 as shown in Figure 1a has an eight-shaped cross section which provides a higher mechanical stability to the enclosure 20 compared to a normal cylindrical shaped housing. The eight-shaped cross section of the housing 203 and therewith of the enclosure 20 is adapted to the outer contour of two windings 30, 31 which rests on the limbs 403, 404 of the core-type transformer. Thus, the amount of insulating liquid 205 (oil) in the enclosed volume of the enclosure 20 can be reduced and makes the traction transformer 10 more lightweight and more compact. Because of the higher mechanical stability of the enclosure 20 a more lightweight material like aluminum instead of steel may be used as material for the cylindrical outer housing 203. A cylindrical outer housing 203 made of aluminum shows a good heat conductivity compared to steel and improves the heat dissipation from the traction transformer 10 to its environment.

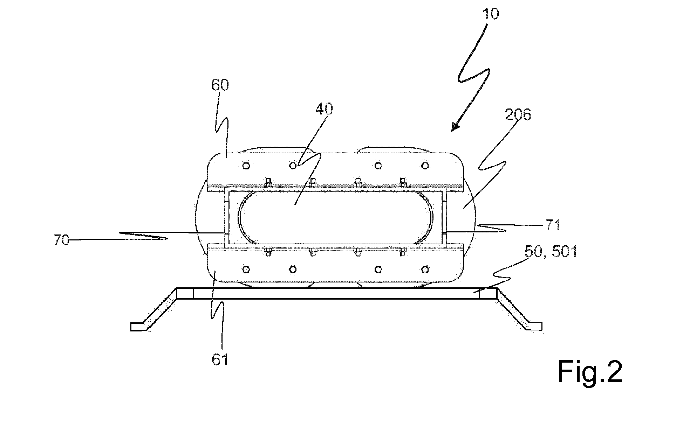

Figure 2 shows a side view of a further embodiment of a traction transformer 10. In difference to the embodiment according to the figures 1a to 2d, the transformer 10 of Figure 2 has mounting means 50 which are embodied as sidebars 501, 502. The side bars 501, 502 are attached to the bottom side of the traction transformer 10 and run parallel to the yokes 401, 402. The sidebars 501, 502 may form a frame if connected to each other.

### Reference list

- 1: railbound vehicle
- 10: traction transformer
- 20: enclosure
- 30, 31: windings
- 40: transformer core
- 50: mounting means
- 60, 61, 62, 63: support elements
- 70, 71, 72, 73: stiffening elements
- 201, 202: cylindrical inner housing
- 203: cylindrical outer housing
- 205: insulating liquid
- 206, 207: first and second covers
- 208, 209: openings in the first and second cover
- 301, 302: first and second leg of the support elements
- 401, 402: transformer yokes
- 403, 404: transformer limbs
- 501, 502: side bars
- 600: adjustment screw
- X: axial direction of the yoke, direction of the side bars
- Y: axial direction of the windings and of the cylindrical inner housings

## Claims

1. A traction transformer (10) for railbound vehicles comprising:
- an insulating liquid filled enclosure (20) with a first and a second cover (206, 207) arranged at longitudinal ends of the enclosure (20),
- at least two windings (30, 31) contained in the enclosure (20),
- a transformer core (40) arranged outside the enclosure (20),
- mounting means (50) for mounting the transformer (10) to the railbound vehicle,
wherein the mounting means (50) are fixed to the enclosure and extend beyond the enclosure.

2. The traction transformer (10) according to claim 1, wherein the mounting means (50) extend beyond a longitudinal end of the enclosure in a longitudinal direction of the core (40).

3. The traction transformer (10) according to claim 2, wherein the mounting means extend beyond a lateral end of the enclosure in a direction perpendicular to the longitudinal direction of the core.

4. The traction transformer (10) according to one of the claims 1 to 3, wherein the mounting means are fixed by welding, screwing or riveting to the bottom side of the enclosure (20).

5. The traction transformer (10) according to any one of the preceding claims, wherein the mounting means are formed as support feet, at least two of them attached on each lateral end of the enclosure.

6. The traction transformer (10) according to any one of the preceding claims 1 to 4, wherein the mounting means (50) are formed as side bars extending in the longitudinal direction and wherein the enclosure (20) rests on the side bars.

7. The traction transformer (10) according to any one of the preceding claims, wherein first and second covers (206, 207) are liquid-tight sealed.

8. The traction transformer (10) according to any one of the preceding claims, wherein the transformer core (40) is attached to the enclosure (20) by at least two support elements (60, 61, 62, 63) at the longitudinal ends of the enclosure (20).

9. The traction transformer (10) according to any one of the preceding claims, wherein the enclosure (20) is formed by two cylindrical inner housings (201, 202) and by a cylindrical outer housing (203) surrounding the two cylindrical inner housings (201, 202), wherein an enclosed volume of the enclosure (20) between the two cylindrical inner housings (200, 201) and the cylindrical outer housing (203) is filled with the insulating liquid (205), and wherein portions of the transformer core (40) extend through the two cylindrical inner housings (200, 201).

10. The traction transformer (10) according to claim 8 or 9, wherein the enclosure (20) is clamped between the at least two support elements (60, 61, 62, 63) pressing at the longitudinal ends of the enclosure onto the first and the second cover (206, 207).

11. The traction transformer (10) according to one of the claim 8 to 10, wherein the first cover (206) and the second cover (207) each having at least one opening (208, 209) matching to a diameter of the at least one cylindrical inner housing (200, 201), and wherein the portions of the transformer core (40) partly extend through the at least one opening (208, 209).

12. The traction transformer (10) according to one of the claims 8 to 11, wherein the at least two support elements (60, 61, 62, 63) are adapted to the shape of the first cover (206) and the second cover (207) preventing a magnetic stray field in an longitudinal direction of the transformer core (40).

13. The traction transformer (10) according to any one of the preceding claims, wherein the traction transformer (10) is a transformer of core-type and wherein the enclosure (20) having an eight-shaped cross section adapted to the contour of the traction transformer (10), which cross section is perpendicular to the longitudinal direction of the transformer core (40).

14. The traction transformer (10) according to one of the claims 9 to 13, wherein the transformer core (40) is of step-lap type and the at least two support elements (60, ..., 63) having a first and a second leg (301, 302) forming an L-profile, and wherein the transformer core (40) and the at least two support elements (60, 61, 62, 63) are screwed together perpendicular to the longitudinal direction of the core (40).

15. The traction transformer (10) according to claim 14, wherein the first legs (301) are screwed together with the transformer core (40) in between and at each longitudinal end of the enclosure (20), and wherein the second legs (302) pressing onto the first and the second cover (206, 207).
